# FASCICULE DE BREVET EUROPEEN

(11) **EP 3 099 560 B1**
(45) Date de publication et mention de la délivrance du brevet: **23.08.2017**
(21) Numéro de dépôt: 15705668.0
(22) Date de dépôt: 30.01.2015
(51) Int. Cl.: B62D 25/08

(54) **TUYAU D'ÉVACUATION POUR BOITE A EAU DE VÉHICULE AUTOMOBILE ET BOITE A EAU CORRESPONDANTE**
ABLAUFSCHLAUCH FÜR DEN WASSERKASTEN EINES FAHRZEUGS UND WASSERKASTEN
DRAIN HOSE FOR THE WATER TROUGH OF A VEHICLE AND WATER TROUGH

(30) Priorité: 30.01.2014 FR 1450717
(43) Date de publication de la demande: 07.12.2016
(73) Titulaire: Renault s.a.s, 92100 Boulogne-Billancourt (FR)
(72) Inventeur: YACOUBIAN, Michael, F-92140 Clamart (FR); LESEL, Georges, F-77400 Saint Thibault des Vignes (FR)
(86) Numéro de dépôt international: PCT/FR2015/050219
(87) Numéro de publication internationale: WO 2015/114271

(56) Documents cités:
- EP-A2- 0 391 177
- WO-A1-2005/123429
- DE-A1- 3 215 195
- DE-A1-102011 100 033

## Description

La présente invention concerne un tuyau d'évacuation pour une boîte à eau de véhicule automobile, et une boîte à eau correspondante.

La boîte à eau est une sorte de gouttière située à la base du pare-brise, de préférence sous les balais d'essuyage avant du véhicule, et orientée transversalement à la direction longitudinale du véhicule. Elle est destinée à assurer la séparation, d'une part, de l'eau susceptible de s'écouler sur le pare-brise et le capot en temps de pluie et/ou lors du nettoyage du pare-brise, et d'autre part, de l'air à acheminer dans l'habitacle via un dispositif de ventilation et de chauffage.

L'eau accumulée dans la boîte à eau doit être évacuée par des tuyaux ou goulottes. La quantité d'eau à évacuer est relativement importante. Elle peut atteindre 1000 millimètres par heure, soit l'équivalent de 15 litres par minute.

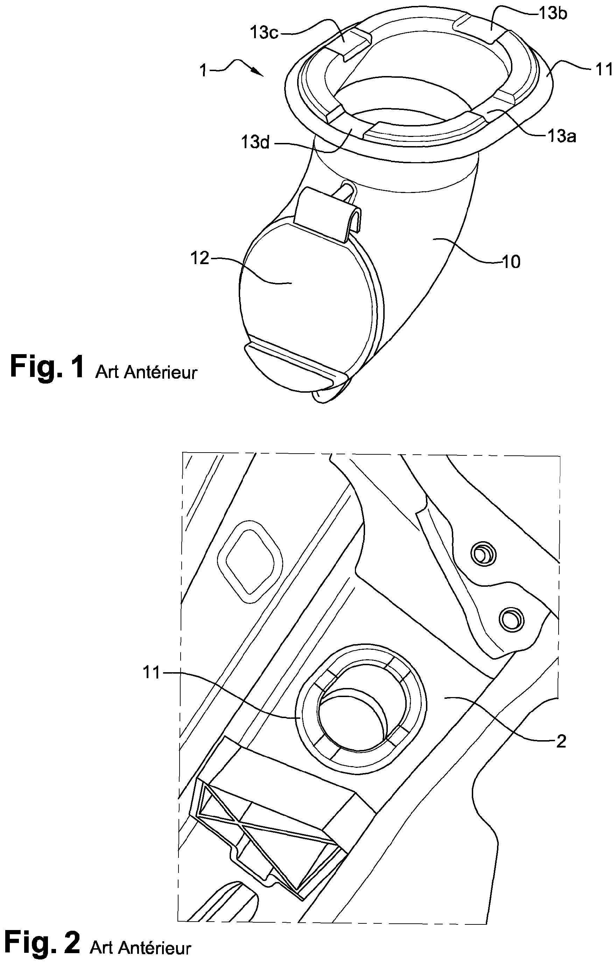

Il est déjà connu d'utiliser un tuyau d'évacuation tel que le tuyau 1 représenté sur la figure 1, pour assurer l'évacuation par le dessous de la boîte à eau, dans un espace alloué situé par exemple entre le tablier de séparation de l'habitacle et du compartiment moteur, la coupelle d'amortisseur et le bloc ABS d'un système de freinage antiblocage. Le tuyau 1 d'évacuation est en matériau plastique relativement souple, tel qu'un caoutchouc ou un élastomère. Comme visible sur la figure 1, le tuyau 1 d'évacuation comprend un corps tubulaire 10 de forme coudée, dont le diamètre est de l'ordre de 30 millimètres. Le corps tubulaire 10 est surmonté, en partie supérieure, d'une collerette 11 de butée pour permettre le montage du tuyau 1 sur une boîte à eau. L'extrémité inférieure du corps tubulaire 10 est pourvue d'un clapet 12 d'obturation maintenu fermé par son élasticité et destiné à s'ouvrir sous l'effet du poids de l'eau. Comme représenté sur la figure 2, le tuyau 1 d'évacuation est mis en place par le dessus au travers d'un orifice circulaire (non visible) prévu dans une paroi de fond 2 de la boîte à eau et de taille inférieure à la collerette 11. Le tuyau 1 d'évacuation est maintenu en place grâce notamment à la collerette 11 de butée qui vient en appui sur le côté de la paroi de fond 2 interne à la boîte à eau (figure 2).

Le tuyau est en outre positionné de manière à permettre l'évacuation de l'eau dans l'espace alloué prévu. L'eau peut ainsi s'écouler par exemple sur le protecteur de roue, et se répandre vers le sol. La partie supérieure de la collerette 11 comprend en outre classiquement des zones creuses ou empreintes 13a, 13b, 13c et 13d, de préférence régulièrement espacées, qui viennent abaisser localement le niveau supérieur de la collerette, facilitant ainsi l'évacuation (voir aussi DE3215195A et DE102011100033A). Dans ce type d'arrangement néanmoins, une faible quantité d'eau reste cependant toujours en rétention au fond de la boîte à eau. Il en résulte à terme une corrosion nécessitant une intervention sur la boîte à eau.

L'invention a pour but de pallier l'inconvénient précédent en limitant au maximum tout risque de rétention d'eau dans la boîte à eau pour éviter les risques de corrosion.

A cet effet, l'invention a pour objet un tuyau d'évacuation pour boîte à eau de véhicule automobile, comportant :
un corps tubulaire apte à s'étendre au travers d'un orifice d'une paroi de fond d'une boîte à eau ;
une collerette de butée surmontant le corps tubulaire, ladite collerette étant apte à venir en appui sur une face interne de la paroi de fond ; et
au moins une découpe complète dans la collerette formant une interruption du pourtour de la collerette.

Selon un mode de réalisation possible, le tuyau d'évacuation comporte une unique découpe complète dans ladite collerette de butée, centrée sensiblement sur un premier axe de symétrie de la collerette destiné à s'étendre sensiblement horizontalement et de manière transverse par rapport à un axe longitudinal d'un véhicule automobile.

En variante, le pourtour de la collerette de butée est interrompu par trois découpes réparties angulairement, une première découpe étant centrée sensiblement sur un premier axe de symétrie de la collerette destiné à s'étendre sensiblement horizontalement et de manière transverse par rapport à un axe longitudinal d'un véhicule automobile, et les deux autres découpes étant placées sensiblement symétriquement par rapport audit axe de symétrie. Dans cette variante, l'évacuation est ainsi favorisée par les possibles inclinaisons du véhicule (avant/arrière ou virages).

De préférence, la collerette de butée est de forme sensiblement oblongue, ledit premier axe de symétrie correspondant à la plus grande dimension de la forme oblongue.

De préférence encore, le tuyau comporte en outre, sous la collerette de butée, une protubérance apte à venir se loger dans une forme complémentaire de la boîte à eau, et servant ainsi d'index pour un montage correct du tuyau.

Le corps tubulaire peut présenter une forme coudée.

En outre, des moyens de maintien du tuyau par clippage sur une paroi de fond d'une boîte à eau sont avantageusement prévus sur le corps tubulaire.

Des joints latéraux sur les deux bords de chaque découpe complète dans la collerette sont de préférence prévus pour éviter que l'eau ne fasse le tour du tuyau d'évacuation.

La présente invention a également pour objet une boîte à eau pour véhicule automobile, comportant une paroi de fond percée d'un orifice pour l'évacuation d'eau, caractérisée en ce qu'elle est pourvue d'un tuyau d'évacuation selon le premier objet, ledit tuyau d'évacuation étant monté de sorte que le corps tubulaire s'étende au travers dudit orifice et que la collerette de butée vienne en appui sur une face interne de la paroi de fond.

La paroi de fond est agencée de préférence en recouvrement ou tuilage par rapport à une surface supérieure du corps tubulaire.

D'autres caractéristiques et avantages de la présente invention ressortiront de la description suivante, faite en référence aux figures annexées, dans lesquelles :
- la figure 1, déjà décrite, illustre un tuyau d'évacuation connu pour boîte à eau ;
- la figure 2, déjà décrite, est une vue partielle montrant le tuyau d'évacuation de la figure 1 monté sur une boîte à eau ;
- la figure 3 représente un tuyau d'évacuation selon un premier mode de réalisation de l'invention ;
- la figure 4 est une vue partielle montrant le tuyau d'évacuation de la figure 2 monté sur une boîte à eau ;
- la figure 5 est une vue partielle d'une variante apportée au tuyau d'évacuation selon la figure 3 ;
- les figures 6 et 7 sont deux vues en perspective, respectivement de dessus et de dessous, d'un tuyau d'évacuation selon un deuxième mode de réalisation conforme à l'invention ;
- la figure 8 est une vue partielle en perspective montrant le tuyau d'évacuation des figures 6 et 7 monté sur une boîte à eau.

Dans la suite, les éléments communs à l'ensemble des figures portent les mêmes références.

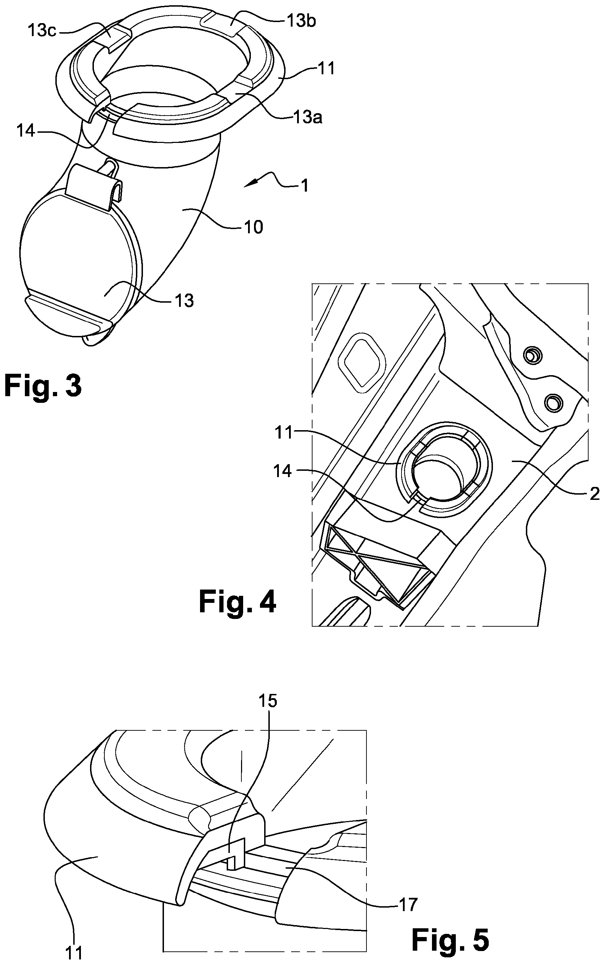

Les figures 3 et 4 montrent les modifications apportées au tuyau 1 d'évacuation des figures 1 et 2 conformément à un premier mode de réalisation de l'invention. On retrouve donc sur la figure 3 la forme générale du tuyau 1 d'évacuation déjà décrite en référence avec la figure 1, avec un corps tubulaire 10, de préférence coudé en partie inférieure, la collerette 11 de butée, et le clapet 12 d'obturation. La collerette 11 de butée possède avantageusement une forme oblongue, la plus grande dimension étant sensiblement parallèle à la partie coudée du corps tubulaire 10. Le tuyau 1 d'évacuation est monté sur la paroi 2 de fond de la boîte à eau de sorte que la plus grande dimension de la collerette 11 de butée soit sensiblement transversale, par exemple perpendiculaire, à l'axe longitudinal du véhicule automobile. On retrouve également, dans ce mode de réalisation, les trois zones creuses ou empreintes 13b, 13c et 13d, de préférence régulièrement espacées, qui viennent abaisser localement le niveau supérieur de la collerette. En revanche, la zone creuse 13a de la figure 1 a été remplacée ici par une découpe complète 14 formant une interruption du pourtour de la collerette 11 de butée. La découpe complète est centrée de préférence sur un premier axe de symétrie de la collerette 11, correspondant à la plus grande dimension de la collerette 11 de butée de forme oblongue, par exemple du côté du volet 13 d'obturation. La zone creuse ou empreinte 13b est centrée de préférence sur ce même premier axe, alors que les deux autres empreintes 13a et 13c se retrouvent centrées de préférence sur le deuxième axe de symétrie, à l'opposé l'une de l'autre. Le tuyau 1 d'évacuation est maintenu en place, d'une part, grâce à la collerette 11 de butée, et d'autre part, par des mini nervures ou bossages (non visibles sur les vues des figures) en saillie par rapport au corps tubulaire 10 en dessous de la collerette, qui se placent en dessous de la paroi 2 de fond et assurent un clippage du tuyau sur cette paroi 2 de fond.

En formant une découpe complète de la collerette, on favorise ainsi l'évacuation de l'eau. La localisation particulière de la découpe dans cet exemple permet d'utiliser l'inclinaison du véhicule en roulage, en particulier dans les virages, pour guider l'eau au travers de la découpe 14. Des joints latéraux 15 sur les deux bords de la découpe 14 (un seul étant visible sur la figure 5) sont avantageusement prévus pour éviter que l'eau ne fasse le tour du tuyau sans pénétrer dans l'orifice d'évacuation formé par le corps tubulaire.

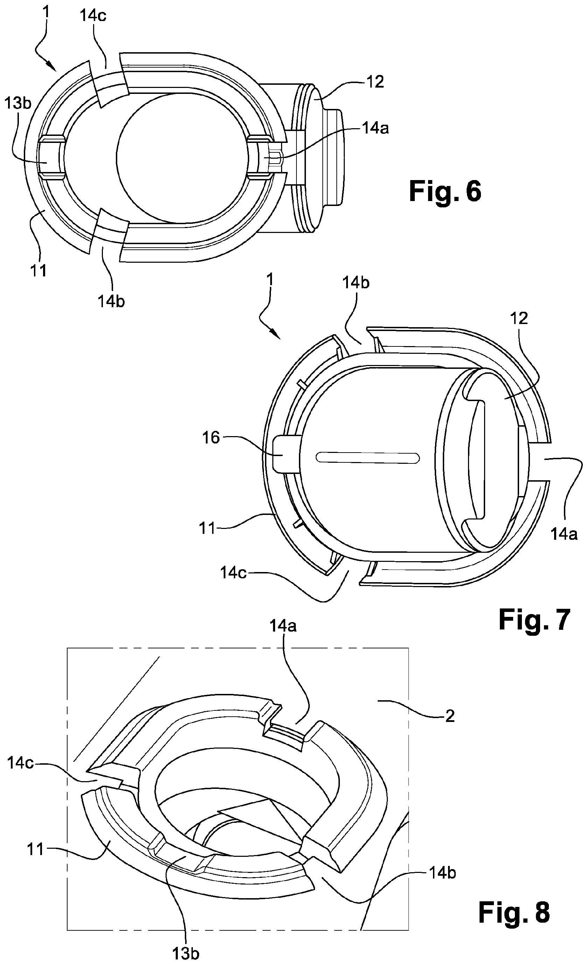

Les figures 6 à 8 illustrent un tuyau 1 d'évacuation pour boîte à eau selon un deuxième mode de réalisation possible conforme à l'invention, dans lequel le pourtour de la collerette 11 de butée est interrompu par trois découpes 14a, 14b et 14c réparties angulairement. La découpe 14a est ici centrée avantageusement sur le premier axe de symétrie de la collerette 11, correspondant à la plus grande dimension de la forme oblongue, à l'opposée d'une empreinte 13b qui vient localement abaisser le niveau supérieur de la collerette 11. Les deux autres découpes 14b et 14c sont placées symétriquement par rapport à ce premier axe de symétrie. Grâce à cet arrangement, on utilise également l'éventuelle inclinaison du véhicule vers l'avant ou l'arrière pour faciliter l'évacuation des résidus d'eau au travers des découpes 14b et 14c.

Comme visible sur la figure 7, le tuyau 1 d'évacuation comporte en outre, sous la collerette 11 de butée, de préférence en dessous de l'empreinte 13b, une protubérance 16 apte à venir se loger dans une forme complémentaire (non représentée sur les figures) du fond 2 de la boîte à eau, et servant ainsi d'index de façon à orienter correctement le tuyau 1 d'évacuation lors de son montage dans la boîte à eau. Bien que non visible sur les figures 3 à 5, une telle protubérance peut également être prévue dans le premier mode de réalisation décrit ci-avant. Tout comme dans le mode de réalisation précédent, des mini nervures ou bossages en saillie sur le corps tubulaire 10, en dessous de la collerette 11 de butée, sont avantageusement prévues pour permettre un maintien du tuyau 1 d'évacuation par clippage sur la paroi 2 de fond.

Un autre intérêt du mode de réalisation selon les figures 6 à 8 réside dans l'agencement respectif de la paroi 2 de fond et du tuyau. Plus précisément, comme particulièrement visible sur la figure 8, la paroi 2 de fond de la boîte à eau s'appuie par-dessus la surface supérieure de la portion cylindrique du corps tubulaire 11, contrairement à l'agencement montré sur la figure 4 dans lequel la paroi se retrouve plus bas que cette surface, ce qui crée localement un muret 17 (voir figure 5), certes de faible hauteur, mais pouvant nuire à un parfait écoulement de l'eau. Grâce à un tel agencement par tuilage ou recouvrement, il n'est plus nécessaire de prévoir des joints latéraux au niveau des flancs des découpes.

## Revendications

1. Tuyau (1) d'évacuation pour boîte à eau de véhicule automobile comportant :
- un corps tubulaire (10) apte à s'étendre au travers d'un orifice d'une paroi (2) de fond d'une boîte à eau ;
- une collerette (11) de butée surmontant le corps tubulaire, ladite collerette (11) étant apte à venir en appui sur une face interne de la paroi (2) de fond, **caractérisé en ce qu'**il comprend
- au moins une découpe (14 ; 14a, 14b, 14c) complète dans la collerette formant une interruption du pourtour de la collerette.

2. Tuyau (1) d'évacuation selon la revendication 1, **caractérisé en ce qu'**il comporte une unique découpe (14) complète dans ladite collerette (11) de butée, centrée sensiblement sur un premier axe de symétrie de la collerette destiné à s'étendre sensiblement horizontalement et de manière transverse par rapport à un axe longitudinal d'un véhicule automobile.

3. Tuyau (1) d'évacuation selon la revendication 1, caractérisé en ce le pourtour de la collerette (11) de butée est interrompu par trois découpes (14a, 14b, 14c) réparties angulairement, une première (14a) découpe étant centrée sensiblement sur un premier axe de symétrie de la collerette destiné à s'étendre sensiblement horizontalement et de manière transverse par rapport à un axe longitudinal d'un véhicule automobile, et les deux autres découpes (14b, 14c) étant placées sensiblement symétriquement par rapport audit axe de symétrie.

4. Tuyau (1) d'évacuation selon l'une quelconque des revendications 2 ou 3, **caractérisé en ce que** la collerette (11) de butée est de forme sensiblement oblongue, ledit premier axe de symétrie correspondant à la plus grande dimension de la forme oblongue.

5. Tuyau (1) d'évacuation selon l'une quelconque des revendications précédentes, **caractérisé en ce qu'**il comporte en outre, sous la collerette (11) de butée, une protubérance (16) apte à venir se loger dans une forme complémentaire de la boîte à eau, et servant ainsi d'index pour un montage correct du tuyau.

6. Tuyau (1) d'évacuation selon l'une quelconque des revendications précédentes, **caractérisé en ce que** le corps tubulaire (10) a une forme coudée.

7. Tuyau (1) d'évacuation selon l'une quelconque des revendications précédentes, **caractérisé en ce qu'**il comporte des moyens de maintien du tuyau par clippage sur une paroi (2) de fond d'une boîte à eau.

8. Tuyau (1) d'évacuation selon l'une quelconque des revendications précédente, **caractérisé en ce que** des joints latéraux (15) sur les deux bords de ladite au moins une découpe (14 ; 14a, 14b, 14c).

9. Boîte à eau pour véhicule automobile, comportant une paroi (2) de fond percée d'un orifice pour l'évacuation d'eau, **caractérisée en ce qu'**elle est pourvue d'un tuyau (1) d'évacuation selon l'une quelconque des revendications 1 à 8, ledit tuyau (1) d'évacuation étant monté de sorte que le corps tubulaire (10) s'étende au travers dudit orifice et que la collerette (11) de butée vienne en appui sur une face interne de la paroi (2) de fond.

10. boîte à eau selon la revendication 9, **caractérisée en ce que** la paroi (2) de fond est agencée en recouvrement ou tuilage par rapport à une surface supérieure du corps tubulaire (10).

## Patentansprüche

1. Ablaufrohr (1) für den Wasserkasten eines Kraftfahrzeugs, welcher Folgendes aufweist:
einen rohrförmigen Körper (10), welcher dafür geeignet ist, sich durch eine Öffnung einer Bodenwand (2) eines Wasserkastens hindurch zu erstrecken;
einen Anschlagkragen (11), welcher den rohrförmigen Körper überragt, wobei der Kragen (11) dafür geeignet ist, sich an einer Innenfläche der Bodenwand (2) abzustützen, **dadurch gekennzeichnet, dass** es
mindestens ein vollständigen Ausschnitt (14; 14a, 14b, 14c) in dem Kragen aufweist, welcher eine Unterbrechung des Umfangs des Kragens bildet.

2. Ablaufrohr (1) nach Anspruch 1, **dadurch gekennzeichnet, dass** es einen einzigen, kompletten Ausschnitt (14) in dem Anschlagkragen (11) aufweist, welcher im Wesentlichen zu einer ersten Symmetrieachse des Kragens zentriert ist, welche dafür vorgesehen ist, sich im Wesentlichen horizontal und auf transversale Weise in Bezug auf eine longitudinale Achse eines Kraftfahrzeugs zu erstrecken.

3. Ablaufrohr (1) nach Anspruch 1, **dadurch gekennzeichnet, dass** der Umfang des Anschlagkragens (11) durch drei Ausschnitte (14a, 14b, 14c), welche über den Umfang verteilt sind, unterbrochen ist, wobei ein erster Ausschnitt (14a) im Wesentlichen zu einer ersten Symmetrieachse des Kragens zentriert ist, welche dafür vorgesehen ist, sich im Wesentlichen horizontal und auf transversale Weise in Bezug auf eine longitudinale Achse eines Kraftfahrzeugs zu erstrecken, und die beiden anderen Ausschnitte (14b, 14c) im Wesentlichen symmetrisch in Bezug auf die Symmetrieachse angeordnet sind.

4. Ablaufrohr (1) nach einem der Ansprüche 2 oder 3, **dadurch gekennzeichnet, dass** der Anschlagkragen (11) von im Wesentlichen länglicher Form ist, wobei die erste Symmetrieachse der größten Abmessung der länglichen Form entspricht.

5. Ablaufrohr (1) nach einem der vorhergehenden Ansprüche, **dadurch gekennzeichnet, dass** es außerdem unter dem Anschlagkragen (11) eine Ausstülpung (16) aufweist, welche dafür geeignet ist, sich in einer komplementären Form des Wasserkastens einzufügen und so als Marke für den richtigen Einbau des Rohrs dient.

6. Ablaufrohr (1) nach einem der vorhergehenden Ansprüche, **dadurch gekennzeichnet, dass** der rohrförmige Körper (10) eine abgewinkelte Form hat.

7. Ablaufrohr (1) nach einem der vorhergehenden Ansprüche, **dadurch gekennzeichnet, dass** es Mittel zum Festhalten des Rohrs durch Einrasten an einer Bodenwand (2) eines Wasserkastens aufweist.

8. Ablaufrohr (1) nach einem der vorhergehenden Ansprüche, **dadurch gekennzeichnet, dass** seitliche Dichtungen (15) an den beiden Rändern des mindestens einen Ausschnitts (14; 14a, 14b, 14c).

9. Wasserkasten für ein Kraftfahrzeug, aufweisend eine Bodenwand (2), welche von einer Öffnung für den Ablauf von Wasser durchbohrt ist, **dadurch gekennzeichnet, dass** er mit einem Ablaufrohr (1) nach einem der Ansprüche 1 bis 8 versehen ist, wobei das Ablaufrohr (1) derartig montiert ist, dass sich der rohrförmige Körper (10) durch die Öffnung hindurch erstreckt und dass der Anschlagkragen (11) sich an einer Innenfläche der Bodenwand (2) abstützt.

10. Wasserkasten nach Anspruch 9, **dadurch gekennzeichnet, dass** die Bodenwand (2) in Abdeckung oder Überlappung in Bezug auf eine obere Fläche des rohrförmigen Körpers (10) eingerichtet ist.

## Claims

1. Drainage pipe (1) for a motor vehicle water box, comprising:
- a tubular body (10) able to extend through an orifice in a bottom wall (2) of a water box;
- a stop flange (11) surmounting the tubular body, said flange (11) being able to bear on an inner face of the bottom wall (2), **characterized in that** it comprises:
- at least one complete cutout (14; 14a, 14b, 14c) in the flange forming an interruption of the periphery of the flange.

2. Drainage pipe (1) according to Claim 1, **characterized in that** it comprises a single complete cutout (14) in said stop flange (11), centred substantially on a first axis of symmetry of the flange intended to extend substantially horizontally and in a transverse manner with respect to a longitudinal axis of a motor vehicle.

3. Drainage pipe (1) according to Claim 1, **characterized in that** the periphery of the stop flange (11) is interrupted by three angularly distributed cutouts (14a, 14b, 14c), a first (14a) cutout being centred substantially on a first axis of symmetry of the flange intended to extend substantially horizontally and in a transverse manner with respect to a longitudinal axis of a motor vehicle, and the other two cutouts (14b, 14c) being placed substantially symmetrically with respect to said axis of symmetry.

4. Drainage pipe (1) according to either one of Claims 2 and 3, **characterized in that** the stop flange (11) is of substantially oblong shape, said first axis of symmetry corresponding to the largest dimension of the oblong shape.

5. Drainage pipe (1) according to any one of the preceding claims, **characterized in that** it additionally comprises, below the stop flange (11), a protuberance (16) able to be housed in a complementary shape of the water box, and thus serving as an index for correct mounting of the pipe.

6. Drainage pipe (1) according to any one of the preceding claims, **characterized in that** the tubular body (10) has an elbowed shape.

7. Drainage pipe (1) according to any one of the preceding claims, **characterized in that** it comprises means for retaining the pipe by clipping it onto a bottom wall (2) of a water box.

8. Drainage pipe (1) according to any one of the preceding claims, **characterized in that** lateral seals (15) on the two edges of said at least one cutout (14; 14a, 14b, 14c).

9. Water box for a motor vehicle, comprising a bottom wall (2) pierced with an orifice for draining water, **characterized in that** it is provided with a drainage pipe (1) according to any one of Claims 1 to 8, said drainage pipe (1) being mounted such that the tubular body (10) extends through said orifice and that the stop flange (11) bears on an inner face of the bottom wall (2).

10. Water box according to Claim 9, **characterized in that** the bottom wall (2) is arranged in an overlapping or imbricated manner with respect to an upper surface of the tubular body (10).
